# EUROPEAN PATENT APPLICATION

(11) **EP 4 391 183 A1**
(43) Date of publication of application: **26.06.2024**
(21) Application number: 23777706.5
(22) Date of filing: 21.02.2023
(51) Int. Cl.: H01M 50/30, H01M 50/152

(54) **END COVER, BATTERY CELL, BATTERY, AND ELECTRIC APPARATUS**

(30) Priority: 01.04.2022 CN 202220746310 U
(71) Applicant: Contemporary Amperex Technology Co., Limited, Ningde, Fujian 352100 (CN)
(72) Inventor: ZHONG, Qineng, Ningde, Fujian 352100 (CN); XING, Chengyou, Ningde, Fujian 352100 (CN); YAN, Miaomiao, Ningde, Fujian 352100 (CN); SONG, Shutao, Ningde, Fujian 352100 (CN); ZHANG, Xiaoxi, Ningde, Fujian 352100 (CN)
(74) Representative: Holt, Lucy Rose
(86) International application number: PCT/CN2023/077469
(87) International publication number: WO 2023/185327

(57) **Abstract**

The embodiments of the present application provide an end cover, a battery cell, a battery, and an electric apparatus, relating to the technical field of batteries. The end cover comprises a cover body and an arc-shaped groove. The arc-shaped groove is provided in the cover body, and the cover body is configured to crack along the arc-shaped groove when a pressure or temperature in the battery cell reaches a threshold, such that the pressure in the battery cell is released. A depth of the arc-shaped groove is gradually increased from the middle of the arc-shaped groove to the two ends of the arc-shaped groove. In this way, a residual thickness of the cover body at the position where the arc-shaped groove is arranged is gradually increased from the two ends of the arc-shaped groove to the middle of the arc-shaped groove, such that an anti-damage capability of the cover body at the middle of the arc-shaped groove is increased, the risk that the end cover starts to relieve the pressure before the pressure in the battery cell reaches an initiation pressure is reduced, and the service life of the battery cell is prolonged.

## Description

### Cross-reference to Related Applications

The present disclosure claims priority to Chinese patent Application No. 2022207463108, filed with the Chinese Patent Office on April 01, 2022, entitled "End Cover, Battery Cell, Battery, and Electrical Device," the entire contents of which are incorporated herein by reference.

### Technical Field

The present disclosure relates to the technical field of batteries, and specifically relates to an end cover, battery cell, battery, and electrical device.

### Background Art

With the development of new energy technology, batteries are being used more and more widely, for example, in a cell phone, laptop computer, electric bicycle, electric car, electric airplane, electric boat, electric toy car, electric toy boat, electric toy airplane and power tool, etc.

As an energy storage element, a battery cell generally outputs electrical energy through a chemical reaction between an electrode assembly and an electrolyte. In battery technology, it is necessary to consider a safety of the battery cell, as well as to consider a service life of the battery cell. Therefore, how to improve the service life of the battery cell is a problem urgently to be addressed in battery technology.

### Summary

Embodiments of the present disclosure provide an end cover, battery cell, battery, and electrical device, which can effectively improve the service life of the battery cell.

In a first aspect, the embodiments of the present disclosure provide an end cover applied to battery cell, and the end cover includes a cover body and an arc groove. The arc groove is configured in the cover body, wherein the cover body is configured to crack along the arc groove to release pressure inside the battery cell when a pressure or temperature inside the battery cell reaches a threshold. A depth of the arc groove gradually increases from a middle position of the arc groove to two ends of the arc groove.

In the above technical solution, the depth of the arc groove gradually increases from the middle position of the arc groove to the two ends of the arc groove, so that a residual thickness of the cover body at a position where the arc groove is arranged gradually increases from the two ends of the arc groove to the middle position of the arc groove, which increases a damage resistance of the cover body at the middle position of the arc groove, and reduces the risk that the end cover starts to release pressure before the pressure inside the battery cell reaches a burst pressure, thereby improving the service life of the battery cell.

In some embodiments, the end cover further includes two through holes, wherein the through holes is configured to penetrate the cover body, the through holes are configured to mount electrode terminals, wherein a perpendicular bisector of a line of the two through holes intersects the arc groove at the middle position. The middle position of the arc groove of this structure is located at the perpendicular bisector of the line of two through holes, so that the cover body can provide a relief groove with more arrangement space to arrange a pressure relief groove of larger size, which is benefit to increase a pressure relief area of the end cover.

In some embodiments, the arc groove is symmetrical about the perpendicular bisector. In this way, the arc groove can be arranged on the cover body more regularly, so that the pressure relief groove of larger size can be arranged on the cover body, which is benefit to increase the pressure relief area of the end cover.

In some embodiments, a center of the circle of the arc groove and a center of the circle of the cover body are both located at the perpendicular bisector. In this way, the perpendicular bisector of the line of the two through holes passes through the center of the circle of the arc groove and the center of the circle of the cover body, so that the pressure relief groove of larger size can be arranged on the cover body, which is benefit to increase the pressure relief area of the end cover.

In some embodiments, the cover body is a circle. The cover body of a circular structure has a simple molding process, which can be applied to a cylindrical battery cell.

In some embodiments, the center of the circle of the arc groove coincides with the center of the circle of the cover body, so that the arc groove extends along a circumferential direction of the cover body, which is beneficial for arranging the pressure relief groove of larger size on the cover body. Additionally, distances are equal from any positions of the arc groove of this structure to an edge of the cover body, which is less likely to have a local stress concentration of the cover body, so as to improve the service life of the battery cell.

In some embodiments, in the arc groove, the middle position is closest to an edge of the cover body. The cover body is easy to have the stress concentration at the middle position of the arc groove, since the depth of the arc groove gradually increases from the middle position of the arc groove to the two ends of the arc groove, which can weaken an extent of affecting a damage resistance of the cover body due to the stress concentration at the middle position of the pressure relief groove, so as to improve the service life of the battery cell.

In some embodiments, the middle position is furthest to the edge of the cover body on the arc groove. The middle position of the arc groove of this structure is less likely to have the stress concentration, which reduces a risk that the damage resistance is reduced result from the stress concentration existing in the middle position of the arc groove of the cover body, so as to improve the service life of the battery cell.

In some embodiments, a connecting line between the middle position and the center of the circle of the cover body extends along a radial direction of the cover body, and a distance from the arc groove to a reference line increases gradually from the middle position to the two ends of the arc groove, wherein the reference line passes through the center of the circle of the cover body and is perpendicular to a connecting line the middle position and the center of the circle of the cover body. The effect that the middle position of the arc groove is furthest away from the edge of the cover body is realized by gradually increasing the distance of the arc groove to the reference line from the middle position to the two ends of the arc groove, which is simple to be realized and easy to be molded and manufactured.

In some embodiments, a central angle of the arc groove is less than or equal to 180°. The extended range of the arc groove of this structure is not too large, so that the arc groove does not take up too much space of the cover body, so as to facilitate arrangement of other components on the end cover.

In some embodiments, the two ends of the arc grooves are connected and form a circle, and the center of the circle of the cover body is located outside a circular area defined by the arc groove. In the arc groove, the middle position is closest to the edge of the cover body. The arc groove is a circular structure, so that the pressure relief region defined by the arc groove is a circle, which can be completely opened when releasing pressure, so that a larger pressure relief area of the end cover can be ensured.

In some embodiments, the end cover further includes a concave part, wherein the concave part is configured to be concave from a surface of the cover body along a thickness direction of the cover body, wherein the arc groove is arranged at a bottom surface of the concave part. It is easier to ensure a residual thickness of the cover body at the position where the arc groove is arranged through an arrangement of the concave part on the end cover, which lowers a manufacturing difficulty of the arc groove and saves costs of production.

In a second aspect, the embodiments of the present disclosure provide a battery cell, which includes a housing and the end cover provided in any of the embodiments of the first aspect, wherein at least one end of the housing is provided with an opening, and the end cover is configured to close the opening.

In a third aspect, the embodiments of the present disclosure provide a battery, which includes a box body and the battery cell provided in any of the embodiments of the second aspect, wherein the box body is configured to accommodate the battery cell.

In a fourth aspect, the embodiments of the present disclosure provide an electrical device, which includes the battery provided in any of the embodiments of the third aspect.

### Brief Description of Drawings

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained based on these drawings without inventive efforts.
FIG. 1 shows a structure schematic diagram of a vehicle provided by some embodiments of the present disclosure;
FIG. 2 shows an explosion diagram of a battery provided by some embodiments of the present disclosure;
FIG. 3 shows an explosion diagram of a battery cell provided by some embodiments of the present disclosure;
FIG. 4 shows an assembly diagram of an end cover and electrode terminals shown in FIG. 3;
FIG. 5 shows a structure schematic diagram of an end cover provided by some embodiments of the present disclosure;
FIG. 6 shows a structure schematic diagram of an end cover provided by some other embodiments of the present disclosure;
FIG. 7 shows a structure schematic diagram of an end cover provided by some other embodiments of the present disclosure; and
FIG. 8 shows a structure schematic diagram of an end cover provided by some other embodiments of the present disclosure.

Reference numbers: 10-box body; 11-first part; 12-second part; 20-battery cell; 21-housing; 22-electrode assembly; 221-positive electrode lug; 222-negative electrode lug; 23-end cover; 231-cover body; 232-arc groove; 2321-middle position; 233-through hole; 234-concave part; 24-electrode terminal; 25-current collecting member; 26-riveting block; 27-insulator; 100-battery; 200-controller; 300-motor; 1000-vehicle; A-first connecting line; B-perpendicular bisector; C-second connecting line; and D-reference line.

### Detailed Description of Embodiments

In order to make the purpose, technical solutions and advantages of the embodiments of the present disclosure clearer, the technical solutions in the embodiments of the present disclosure will be clearly described below in conjunction with drawings in the embodiments of the present disclosure. It is clear that the described embodiments are a part of the embodiments of the present disclosure, and not all of the embodiments. Based on the embodiments of the present disclosure, all the other embodiments obtained by those ordinarily skilled in the art without inventive efforts, shall fall within the scope of protection of the present disclosure.

Unless otherwise defined, all technical and scientific terms used in the present disclosure have the same meaning as commonly understood by those skilled in the art belonging to the present disclosure. In the present disclosure, the terms used in the specification of the present disclosure are used only for the purpose of describing specific embodiments, and are not intended to limit the present disclosure. The terms "include" and "comprise," and any variations thereof in the specification of the present disclosure and claims and the foregoing description of drawings, are intended to cover a non-exclusive inclusion. The terms, such as "first", "second", etc. in the specification and claims or the drawings described above of the present disclosure are used to differentiate different objects, and are not used to describe a particular order or a relationship of priority.

Reference to "embodiment" in the present disclosure means that particular features, structures, or characteristics described in conjunction with the embodiments can be included in the at least one embodiment of the present disclosure. The phrase occurring at various positions in the specification does not necessarily all refer to the same embodiment, nor is it a separate or alternative embodiment that is mutually exclusive with other embodiments.

It should be noted that, in the description of the present disclosure, unless otherwise expressly regulations and definitions, the terms "mount", "link", "connect", and "attach" are to be understood in a broad sense. For example, it can be a fixed connection, a detachable connection, or an integral connection; and it can be a direct connection, an indirect connection through an intermediate medium, or a communication inside the two elements. For those ordinarily skilled in the art, specific meanings of the above terms in the present disclosure can be understood in specific situations.

The term "and/or" in the present disclosure is merely an associated relationship for describing associated objects, which indicates three relationships can exist. For example, A and/or B can indicate three cases: A alone, both A and B, and B alone. Additionally, the character "/" in the present disclosure generally indicates an "or" relationship of the associated objects.

In embodiments of the present disclosure, the same reference numbers indicate the same components. For brevity, the detailed descriptions for the same components in different embodiments are omitted. It should be understood that, as shown in the drawings, the thickness, length, width, and other dimensions of the various components in the embodiments of the present disclosure, as well as the overall thickness, length, width, and other dimensions of the integrated device are illustrative only, and should not constitute any limitation of the present disclosure.

As used in the present disclosure, "plurality" means more than two (including two).

In the present disclosure, the battery cell can include a lithium-ion secondary battery, a lithium-ion primary battery, a lithium-sulfur battery, a sodium-lithium-ion battery, a sodium-ion battery, or a magnesium-ion battery, etc., which is not limited by the embodiments of the present disclosure. The battery cell can be in cylindrical, flat, rectangular, or other shapes, etc., which is not limited thereto by the embodiments of the present disclosure. The battery cells are generally classified into three types according to packaging method: cylindrical battery cell, square battery cell, and soft pack battery cell, which is not limited thereto by the embodiments of the present disclosure.

The battery referred to in embodiments of the present disclosure refers to a single physical module including one or more battery cells to provide a higher voltage and capacity. For example, the battery referred to in the present disclosure can include a battery module or battery pack, etc. The battery generally includes a box body for packaging one or more battery cells, wherein the box body can prevent liquid or other foreign objects from affecting the charging or discharging of the battery cell.

The battery cell includes electrode assembly and electrolyte, wherein the electrode assembly is consisted of a positive electrode plate, negative electrode plate, and isolation diaphragm. The battery cell works mainly relying on metal ions moving between the positive electrode plate and the negative electrode plate. The positive electrode plate includes a positive electrode collector and a positive electrode active substance layer, wherein the positive electrode active substance layer is coated on a surface of the positive electrode collector. The positive electrode collector not coated with the positive electrode active substance layer protrudes out of the positive electrode collector coated with the positive electrode active substance layer, and the positive electrode collector not coated with the positive electrode active substance layer is configured as a positive electrode lug. Taking the lithium-ion battery as an example, the material of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector. The negative electrode collector not coated with the negative electrode active substance layer protrudes out of the negative electrode collector coated with the negative electrode active substance layer, and the negative electrode collector not coated with the negative electrode active substance layer is configured as a negative electrode lug. The material of the negative electrode collector can be copper, and the negative electrode active substance can be carbon or silicon, etc. In order to ensure that a heavy current is passed without fusing, a plurality of positive electrode lugs are provided and laminated together, and a plurality of negative electrode lugs are provided and laminated together. The material of the isolation diaphragm can be PP (polypropylene) or PE (polyethylene), etc. Additionally, the electrode assembly can be a coiled structure or a laminated structure, which is not limited thereto by the embodiments of the present disclosure.

It is necessary to consider multiple design factors simultaneously for the development of the battery technology, such as energy density, cycle life, discharging capacity, charging/discharging rate, and other performance parameters. Additionally, it is necessary to consider the safety of the battery.

In order to ensure the safety of the battery cell, a pressure relief groove is generally arranged on the end cover of the battery cell, so that the pressure relief is realized by cracking the end cover along the pressure relief groove to ensure the safety of the battery cell.

The inventors noted that the internal pressure of the battery cell will change with the ambient temperature in the actual operating environment, that is, the pressure inside the battery cell increases when the temperature increases, and the pressure inside the battery cell decreases when the temperature decreases. The inventors found that, for the end cover provided with an arc pressure relief groove, after the pressure inside the battery cell alternately changes for a long time along with the temperature changes, the end cover is most likely to fatigue at the middle position of the arc pressure relief groove, so that the middle position of the arc pressure relief groove of the end cover is most likely to crack, which is likely to occur that the end cover starts to release the pressure before the pressure inside the battery cell reaches a burst pressure, thereby affecting the service life of the battery cell.

In view of this, the embodiments of the present disclosure provide an end cover. The end cover includes a cover body and an arc groove provided on the cover body, wherein the depth of the arc groove gradually increases from the middle position of the arc groove to the two ends of the arc groove.

In such the end cover, the depth of the arc groove gradually increases from the middle position of the arc groove to the two ends of the arc groove, so that a residual thickness of the cover body at the position where the arc groove is arranged gradually increases from the two ends of the arc groove to the middle position of the arc groove, which increases a damage resistance of the cover body at the middle position of the arc groove, and reduces the risk that the end cover starts to release pressure before the pressure inside the battery cell reaches a burst pressure, thereby improving the service life of the battery cell.

The end cover described in the embodiments of the present disclosure applies to the battery cell, battery, and electrical device using the battery.

The electrical device can be a vehicle, cell phone, portable device, laptop, ship, spacecraft, electric toy and power tool, etc. The vehicle can a be fuel vehicle, gas vehicle, or new energy vehicle, wherein the new energy vehicle can be a pure electric vehicle, hybrid electric vehicle, or range extended vehicle, etc. The spacecraft includes an airplane, rocket, space shuttle and spaceship, etc. The electric toy includes a stationary or movable electric toy, such as a game console, electric car toy, electric boat toy, and electric airplane toy, etc. The electric tool includes a metal cutting electric tool, grinding electric tool, assembling electric tool, and electric tool for railroad, such as an electric drill, electric sander, electric wrench, electric screwdriver, electric hammer, electric drill, concrete vibrator, and electric planer, etc. The embodiments of the present disclosure do not provide any special limitations for the foregoing electrical device.

For the sake of illustration, the following embodiments take a vehicle as an example of an electrical device.

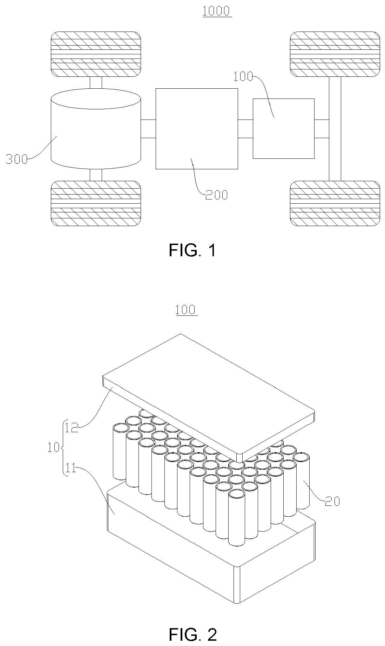

Referring to FIG. 1, FIG. 1 shows the structure schematic diagram of the vehicle 1000 provided by some embodiments of the present disclosure. The battery 100 is arranged inside the vehicle 1000, and the battery 100 can be arranged at the bottom or head or tail of the vehicle 1000. The battery 100 can be configured to supply power to the vehicle 1000, e.g., the battery 100 can be configured as an operating power supply of the vehicle 1000.

The vehicle 1000 can further include a controller 200 and a motor 300, wherein the controller 200 is configured to control the battery 100 to supply power to the motor 300, for example, which is configured to meet an electricity demand of the vehicle 1000 when starting, navigating, and travelling.

In some embodiments of the present disclosure, the battery 100 can not only be configured as the operating power supply of the vehicle 1000, but can also be configured as a driving power supply of the vehicle 1000, which replaces or partially replaces fuel oil or natural gas to provide a driving force for the vehicle 1000.

Referring to FIG. 2, FIG. 2 shows the explosion diagram of the battery 100 provided by some embodiments of the present disclosure. The battery 100 includes a box body 10 and a battery cell 20, wherein the box body 10 is configured to accommodate the battery cell 20.

The box body 10 is a component to accommodate the battery cell 20, and the box body 10 provides an accommodating space for the battery cell 20, wherein the box body 10 can be configured in multiple structures. In some embodiments, the box body 10 can include a first part 11 and a second part 12, wherein the first part 11 and the second part 12 cover each other to define an accommodating space for accommodating the battery cell 20. The first part 11 and the second part 12 can be multiple shapes, such as rectangular, cylinder, etc. The first part 11 can be a hollow structure opening on one side, and the second part 12 can also be a hollow structure opening on one side. The opening side of the second part 12 closes on the opening side of the first part 11, so that the box body 10 with the accommodating space is formed. Alternatively, the first part 11 is the hollow structure opening on one side, and the second part 12 is a plate-shaped structure. The second part 12 is covered on the opening side of the first part 11, so that the box body 10 with the accommodating space is formed. The first part 11 and the second part 12 can be sealed by a sealing element, wherein the sealing element can be a sealing ring, sealing glue, etc.

In the battery 100, one or a plurality of battery cells 20 can be provided. If the plurality of battery cells 20 are provided, the plurality of battery cells 20 can be connected in series or in parallel or in hybrid, wherein a hybrid connection means that the plurality of battery cells 20 are both in series connection and in parallel connection. It can be that the plurality of battery cells 20 are firstly connected in series or in parallel or in hybrid to form a battery module, and the plurality of battery modules are then connected in series or in parallel or in hybrid to form a whole which is accommodated in the box body 10. It can also be that all the battery cells 20 are directly connected together in series or in parallel or in hybrid, and then the whole consisted of all the battery cells 20 is accommodated in the box body 10.

In some embodiments, the battery 100 can also include assembled components. The plurality of battery cells 20 can be electrically connected to each other through assembled components, so that a series connection or parallel connection or mixed connection of the plurality of battery cell 20 can be realized. The assembled component can be a metallic conductor, e.g., copper, iron, aluminum, stainless steel, aluminum alloy, etc.

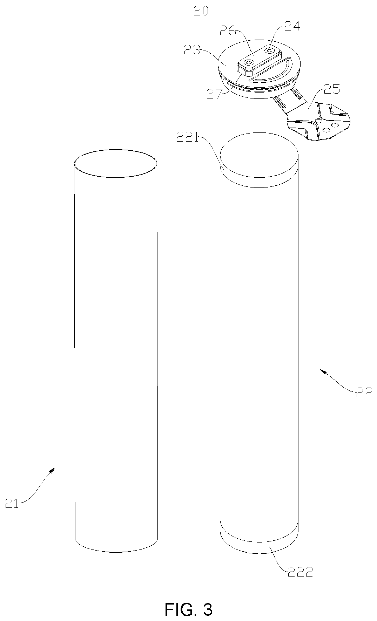

Referring to FIG. 3, FIG. 3 shows the explosion diagram of the battery cell 20 provided by some embodiments of the present disclosure. The battery cell 20 includes a housing 21, electrode assembly 22, and end cover 23.

The housing 21 is a component to accommodate the electrode assembly 22, and the housing 21 can be a hollow structure with an opening forming at one end. The housing 21 can be a hollow structure with openings forming at opposite two ends to accommodate the electrode assembly 22. The housing 21 can be multiple shapes, e.g., cylindrical, rectangular, etc. The housing 21 can be made of multiple materials, e.g., copper, iron, aluminum, steel, aluminum alloy, etc.

The electrode assembly 22 within the housing 21 can be one or multiple. For example, the housing 21 is a cuboid, and a plurality of electrode assemblies 22 within the housing 21 can be provided. For example, as shown in FIG. 3, the housing 21 is a cylinder, and one electrode assembly 22 within the housing 21 can be provided.

The electrode assembly 22 is the component in the battery cell 20 where the electrochemical reaction occurs. The electrode assembly 22 can include a positive electrode plate, a negative electrode plate, and an isolation diaphragm. The electrode assembly 22 can be a coiled structure formed by coiling the positive electrode plate, the isolation diaphragm and the negative electrode plate, or can be a laminated structure formed by layering and arranging the positive electrode plate, the isolation diaphragm and the negative electrode plate. The electrode assembly 22 includes a positive electrode lug 221 and a negative electrode lug 222, wherein the positive electrode lug 221 can be a part of the positive electrode plate not coated with a positive electrode active substance layer, and the negative electrode lug 222 can be a part of the negative electrode plate not coated with a negative electrode active substance layer.

The end cover 23 is a component to close the opening of the housing 21, so as to isolate the internal environment of the battery cell 20 from the external environment. The end cover 23 closes over the opening of the housing 21. The end cover 23 and the housing 21 together define a sealing space to accommodate the electrode assembly 22, electrolyte, and other components. The end cover 23 and the housing 21 can be connected and fixed in multiple methods. For example, the end cover 23 and the housing 21 are welded together. For example, a flap structure is formed at the end of the housing 21, wherein the end cover 23 is defined at an opening position of the housing 21 by the flap structure. The shape of the end cover 23 can be adapted to the shape of the housing 21. For example, the housing 21 is a rectangular structure, and the end cover 23 is a rectangular plate-shaped structure adapted to the housing 21. For example, the housing 21 is a cylindrical structure, and the end cover 23 is a circular plate-shaped structure adapted to the housing 21. The end cover 23 can be made of multiple materials, e.g., copper, iron, aluminum, steel, aluminum alloy, etc. The material of the end cover 23 can be the same as or different from the material of the housing 21.

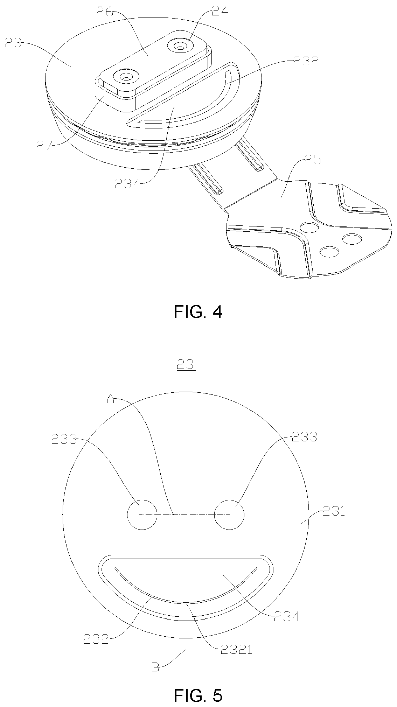

Referring to FIG. 4, FIG. 4 shows an assembled diagram of the end cover 23 and electrode terminal 24 shown in FIG. 3. The electrode terminals 24 can be arranged on the end cover 23, wherein the electrode terminals 24 are configured to electrically connect to lugs (the positive electrode lug 221 or negative electrode lug 222) of the electrode assembly 22 (shown in FIG. 3) to output electrical energy of the battery cell 20. One or two electrode terminals 24 on the end cover 23 can be provided.

Exemplarily, as shown in FIG. 4, two electrode terminals 24 are arranged on the end cover 23. The electrode terminals 24 are connected to the lugs (the positive electrode lug 221 or negative electrode lug 222) by the current collecting member 25, and the two electrode terminals 24 are connected by a riveting block 26. The insulator 27 is arranged between the riveting block 26 and the end cover 23, wherein the riveting block 26 is located outside the end cover 23, and the current collecting member 25 is inside the end cover 23. The riveting block 26, the insulator 27, the end cover 23, and the current collecting member 25 are riveted together by the two electrode terminals 24. The riveting block 26 is configured to connect to other components. For example, in case that the plurality of battery cells 20 realize the series connection or parallel connection or hybrid connection by the assembled component, the riveting block 26 can be welded to the assembled component together. The insulator 27 is made of the insulating material, which can be rubber, plastic, etc.

In the embodiments where the battery cell 20 is provided with two end covers 23, it can be that the two end covers 23 are both provided with electrode terminals 24, e.g., the electrode terminals 24 on one end cover 23 are connected to one of the positive electrode lug 221 and the negative electrode lug 222 by one current collecting member 25, and the electrode terminals 24 on the other end cover 23 are connected to the other of the positive electrode lug 221 and the negative electrode lug 222 by the other current collecting member 25. Of course, it can also be that one end cover 23 is provided with the electrode terminals 24, and the other end cover 23 is not provided with electrode terminals 24, e.g., the electrode terminals 24 on one end cover 23 are connected to one of the positive electrode lug 221 and the negative electrode lug 222 by the current collecting member 25, and the other end cover 23 or the housing 21 is connected to the other of the positive electrode lug 221 and the negative electrode lug 222.

The specific structure of the end cover 23 is described in detail below in conjunction with the drawings.

Referring to FIG. 5, FIG. 5 shows the structure schematic diagram of the end cover 23 provided by some embodiments of the present disclosure. The embodiments of the present disclosure provide an end cover 23 applied to the battery cell 20, wherein the end cover 23 includes a cover body 231 and an arc groove 232. The arc groove 232 is arranged in the cover body 231; and the cover body 231 is configured to crack along the arc groove 232 to release pressure inside the battery cell 20 when a pressure or temperature inside the battery cell 20 reaches a threshold, wherein a depth of the arc groove 232 gradually increases from the middle position 2321 of the arc groove 232 to the two ends of the arc groove 232.

The cover body 231 can be a plurality of shapes, e.g., rectangle, circle, etc. The shape of the cover body 231 can be provided according to the shape of the housing 21 of the battery cell 20.

The arc groove 232 can be molded in the cover body 231 in multiple ways, e.g., carving, stamping, milling, etc. The arc groove 232 is a groove on the cover body 231 in form of a circular arc. The arc groove 232 can be a groove with a central angle larger than 0° and smaller than or equal to 360°; and the arc groove 232 can be a minor arc groove with a central angle smaller than 180° or can be a major arc groove with a central angle larger than 180°. If the central angle of the circle of the arc groove 232 is smaller than 360°, a distance exists between the two ends of the arc groove 232. If the central angle of the circle of the arc groove 232 is equal to 360°, the two ends of the arc groove 232 are connected, so that the arc groove 232 is a circle. The middle position 2321 of the arc groove 232 is the shallowest position of the arc groove 232, and the position where the two ends of the arc groove 232 are connected is the deepest position of the arc groove 232. In the embodiment where the cover body 231 is a circle, the arc groove 232 can be arranged with the cover body 231 concentrically or eccentrically.

The arc groove 232 is a groove in shape of a circular arc, and the arc groove 232 defines a pressure relief region on the cover body 231.Therefore, when the internal pressure or temperature inside the battery cell 20 reaches the threshold, the cover body 231 will crack along the arc groove 232, which ultimately causes the pressure relief region to be opened towards outside of the battery cell 20. When the pressure relief region is opened, an opening part will be formed on the cover body 231 at a position that is corresponding to the pressure relief region, so that discharges inside the battery cell 20 can be discharged by the opening part to realize the pressure relief.

In the embodiment where the central angle of the arc groove 232 is smaller than 360°, since the distance exists between the two ends of the arc groove 232, the pressure relief region will be opened by the way of flipping outwardly when releasing pressure. The pressure relief region is always connected to the other components on the cover body 231 except the pressure relief region, so that the pressure relief region will not detach and fly out due to a rapid outflow of the discharges.

In the embodiments of the present disclosure, the depth of the arc groove 232 gradually increases from the middle position 2321 of the arc groove 232 to the two ends of the arc groove 232, so that the residual thickness of the cover body 231 at the position where the arc groove 232 is arranged gradually increases from the two ends of the arc groove 232 to the middle position 2321 of the arc groove 232, which increases the damage resistance of the cover body 231 at the middle position 2321 of the arc groove 232, and reduces the risk that the end cover 23 starts to release pressure before the pressure inside the battery cell 20 reaches the burst pressure, thereby improving the service life of the battery cell 20.

In some embodiments, referring to FIG. 5, the end cover 23 further includes two through holes 233, wherein the through holes 233 is configured to penetrate the cover body 231, and the through holes 233 are configured to mount the electrode terminals 24. The perpendicular bisector B of the connecting line (the first connecting line A) of the two through holes 233 intersects with the arc groove 232 at the middle position 2321.

It can be understood that the through holes 233 penetrate the opposite inner surface and an outer surface of the cover body 231 at the thickness direction. In the battery cell 20, the inner surface of the cover body 231 is a surface of the cover body 231 facing the interior of the battery cell 20, and the outer surface of the cover body 231 is a surface of the cover body 231 facing the exterior of the battery cell 20. Since the through holes 233 are configured to mount the electrode terminals 24, as long as the electrode terminals 24 are partially accommodated in the through holes 233, it shall be understood that the through holes 233 play a role of mounting the electrode terminals 24. For example, if the riveting block 26, the insulator 27, the end cover 23 and the current collecting member 25 are riveted together by the two electrode terminals 24, the two electrode terminals 24 are separately arranged in the two through holes 233.

The connecting line of the two through holes 233 (the first connecting line A) refers to a connecting line of centers of the circles of the two through holes 233. In the embodiment, the center of the circle of the arc groove 232 may be or may not be located on the perpendicular bisector B of the connecting line (the first connecting line A) of the two through holes 233. Of course, in the embodiment where the end cover 23 is a circle, the perpendicular bisector B of the connecting line (the first connecting line A) of the two through holes 233 can pass through or may not pass through the center of the circle of the end cover 23.

Exemplarily, the arc groove 232 is integrally arranged at one side of the connecting line of the two through holes 233. This structure reduces the influence by the electrode terminals 24 in the through holes 233 when the pressure relief region defined by the arc groove 232 is opened to release pressure, and also reduces the risk that the pressure relief region is obscured by the riveting block 26 and the insulator 27, which ensures the pressure relief region can be opened normally.

In the embodiment, since the perpendicular bisector B of the connecting line (the first connecting line A) of the two through holes 233 intersects with the arc groove 232 at the middle position 2321 of the arc groove 232, and the middle position 2321 of the arc groove 232 is located on the perpendicular bisector line B of the connecting line (the first connecting line A) of the two through holes 233, so that the cover body 231 can provide the relief groove with more arrangement space to arrange the pressure relief groove of larger size, which is benefit to increase the pressure relief area of the end cover 23.

In some embodiments, referring to FIG. 5, the arc groove 232 is symmetrical about the perpendicular bisector B of the connecting line (the first connecting line A) of the two through holes 233.

It can be understood that the perpendicular bisector B of the connecting line of the two through holes 233 (the first connecting line A) is an axis of symmetry of the arc groove 232, and the center of the circle of the arc groove 232 is located on the perpendicular bisector B of the connecting line (the first connecting line A) of the two through holes 233.

In the embodiment, since the arc groove 232 is symmetrical about the perpendicular bisector B of the connecting line (first connecting line A) of the two through holes 233, the arc groove 232 can be arranged on the cover body 231 more regularly, so that the pressure relief groove of larger size can be arranged on the cover body 231, which is benefit to increase the pressure relief area of the end cover 23.

In some embodiments, referring to FIG. 5, the center of the circle of the arc groove 232 and the center of the circle of the cover body 231 are both located on the perpendicular bisector B of the connecting line (the first connecting line A) of the two through holes 233.

Exemplarily, the point of intersection of the connecting line (the first connecting line A) of the two through holes 233 and the perpendicular bisector B coincides with the center of the circle of the cover body 231, so that the two through holes 233 are arranged centrally in the extension direction of the perpendicular bisector B.

In the embodiment, the perpendicular bisector B of the connecting line (the first connecting line A) of the two through holes 233 passes through the center of the circle of the arc groove 232 and the center of the circle of the cover body 231, so that the pressure relief groove of larger size can be arranged on the cover body 231 to increase the pressure relief area of the end cover 23.

In some embodiments, the cover body 231 is a circle. The cover body 231 of circular structure has a simple molding process, which can be applied to a cylindrical battery cell.

In some embodiments, referring to FIG. 5, the center of the circle of the arc groove 232 coincides with the center of the circle of the cover body 231.

It can be understood that the arc groove 232 extends along a circumferential direction of the cover body 231, and distances from any positions of the arc groove 232 to the edge of the cover body 231 are equal.

It should be noted that, in the embodiment, the center of the circle of the arc groove 232 can coincide with the center of the circle of the cover body 231 whether or not the two through holes 233 are arranged on the cover body 231. As shown in FIG. 5, in the embodiment where the two through holes 233 are arranged on the cover body 231, the arc groove 232 can be arranged integrally on one side of the connecting line (the first connecting line A) of the two through holes 233.

In the embodiment, the center of the circle of the arc groove 232 is arranged to coincide with the center of circle of the cover body 231, which is beneficial for arrangement of the pressure relief groove of larger size on the cover body 231. Additionally, distances are equal from any positions of the arc groove 232 of this structure to the edge of the cover body 231, which is less likely to have the local stress concentration of the cover body 231, so as to improve the service life of the battery cell 20.

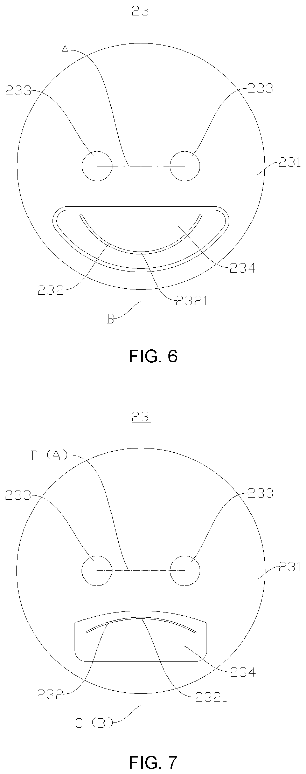

In some embodiments, referring to FIG. 6, FIG. 6 shows the structure schematic diagram of the end cover 23 provided by another embodiments of the present disclosure. In the arc groove 232, the middle position 2321 of the arc groove 232 is closest to the edge of the cover body 231.

The distance between the arc groove 232 and the edge of the cover body 231 is a distance of the cover body 231 in the radial direction, that is, in the radial direction of the cover body 231, the distance from the middle position 2321 of the arc groove 232 to the edge of the cover body 231 is minimum.

It should be noted that, in the embodiment, the middle position 2321 of the arc groove 232 can be closest to the edge of the cover body 231 whether or not the two through holes 233 are arranged on the cover body 231. As shown in FIG. 6, in the embodiment where the two through holes 233 are arranged on the cover body 231, the arc groove 232 can be arranged integrally on one side of the connecting line (the first connecting line A) of the two through holes 233.

In the embodiment, the middle position 2321 of the arc groove 232 is closest to the edge of the cover body 231, so that the middle position 2321 of the arc groove 232 is most likely to be affected by the edge position of the cover body 231. For example, the cover body 231 is welded to the housing 21 and a weld position is located at an edge position of the cover body 231, so that the cover body 231 is easy to have the stress concentration at the middle position 2321 of the arc groove 232. However, since the depth of the arc groove 232 gradually increases from the middle position 2321 of the arc groove 232 to the two ends of the arc groove 232, it can weaken the extent of the damage resistance of the cover body 231 affected by the stress concentration at the middle position 2321 of the pressure relief groove, so as to improve the service life of the battery cell 20.

In some embodiments, referring to FIG. 7, FIG. 7 shows the structure schematic diagram of the end cover 23 provided by another embodiments of the present disclosure. In the arc groove 232, the middle position 2321 of the arc groove 232 is furthest to the edge of the cover body 231.

It can be understood, in the radial direction of the cover body 231, the distance from the middle position 2321 of the arc groove 232 to the edge of the cover body 231 is maximum.

It should be noted that, in the embodiment, the middle position 2321 of the arc groove 232 can be furthest to the edge of the cover body 231 whether or not the two through holes 233 are arranged on the cover body 231. As shown in FIG. 7, in the embodiment where the two through holes 233 are arranged on the cover body 231, the arc groove 232 can be arranged integrally on one side of the connecting line (the first connecting line A) of the two through holes 233.

In the embodiment, the distance from the middle position 2321 of the arc groove 232 to the edge of the cover body 231 is maximum. The middle position 2321 of the arc groove 232 of this structure is less likely to have the stress concentration, which reduces the risk that the damage resistance is reduced result from that the stress concentration exists in the middle position 2321 of the arc groove 232 of the cover body 231, so as to improve the service life of the battery cell 20.

In some embodiments, referring to FIG. 7, connecting line (the second connecting line C) between the middle position 2321 of the arc groove 232 and the center of the circle of the cover body 231 extends along the radial direction of the cover body 231, and a distance from a reference line D to the arc groove 232 gradually increases from the middle position 2321 of the arc groove 232 to the two ends of the arc groove 232. The reference line D passes through the center of the circle of the cover body 231, and the reference line D is perpendicular to the connecting line (the second connecting line C) of the middle position 2321 and the center of the circle of the cover body 231.

The distance from the arc groove 232 to the reference line D is the distance between the arc groove 232 and the reference line D in the extension direction of the second connecting line C, that is, the distance between the arc groove 232 and the reference line D in the extension direction of the second connecting line C gradually increases from the middle position 2321 of the arc groove 232 to the two ends of the arc groove 232.

In the embodiment where the two through holes 233 are arranged on the cover body 231, the reference line D can be the connecting line (the first connecting line A) of the two through holes 233. The connecting line (the second connecting line C) between the middle position 2321 of the arc groove 232 and the center of the circle of the cover body 231 can be the perpendicular bisector B of the connecting line (the first connecting line A) of the two through holes 233.

In the embodiment, the effect that the middle position 2321 of the arc groove 232 is furthest away from the edge of the cover body 231 is realized by gradually increasing the distance of the arc groove 232 and the reference line D from the middle position 2321 to the two ends of the arc groove 232, which is simple to be realized, and easy to be molded and manufactured.

In some embodiments, referring to FIG. 5-FIG. 7, the central angle of the arc groove 232 is smaller than or equal to 180°. The extended range of the arc groove 232 of this structure is not too large, so that the arc groove 232 does not take up too much space of the cover body 231, so as to facilitate arrangement of other components on the end cover 23, such as the insulator 27 and the riveting block 26.

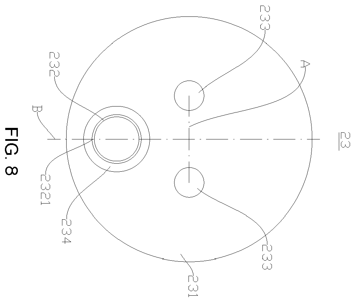

In some embodiments, referring to FIG. 8, FIG. 8 shows the structure schematic diagram of the end cover 23 provided by another embodiments of the present disclosure. The two ends of the arc groove 232 are connected and form a circle, and the center of the circle of the cover body 231 is located outside of the circular area defined by the arc groove 232. In the arc groove 232, the middle position 2321 is closest to the edge of the cover body 231.

It can be understood that the central angle of the arc groove 232 is 360°.

As shown in FIG. 8, in the embodiment where the two through holes 233 are arranged on the cover body 231, the arc groove 232 can be arranged integrally on one side of the connecting line (the first connecting line A) of the two through holes 233, so that the center of the circle of the cover body 231 is located outside of the circular area defined by the arc groove 232.

In the embodiment, the arc groove 232 is of a circular structure, so that the pressure relief region defined by the arc groove 232 is a circle, which can be completely opened when releasing pressure, so that the larger pressure relief area of the end cover 23 can be ensured.

In some embodiments, referring to FIG. 5-FIG. 8, the end cover 23 can further include a concave part 234, wherein the concave part 234 is concave from a surface of the cover body 231 along a thickness direction of the cover body 231, and the arc groove 232 is arranged at a bottom surface of the concave part 234.

Specifically, the concave part 234 is concave from the outer surface of the cover body 231 towards the inner surface close to the cover body 231. The concave part 234 can be of multiple shapes, such as rectangle, circle, circular arc, crescent, etc.

Exemplarily, as shown in FIG. 5, in the embodiment where the center of the circle of the arc groove 232 is arranged to coincide with the center of the circle of the cover body 231, the concave part 234 can be arranged in shape of the crescent, wherein a part of the wall of the concave part 234 is an arc segment and the arc segment is arranged in correspondence with the arc groove 232. As shown in FIG. 6, in the embodiment where the middle position 2321 of the arc groove 232 is closest to the edge of the cover body 231, the concave part 234 can also be arranged in shape of the crescent, or a part of the wall of the concave part 234 is the arc segment and the arc segment is arranged in correspondence with the arc groove 232. As shown in FIG. 7, in the embodiment where the middle position 2321 of the arc groove 232 is furthest away from the edge of the cover body 231, the concave part 234 can be approximately arranged in shape of the rectangle, and one side of the rectangle can be arranged in shape of the circular arc corresponding to the arc groove 232. As shown in FIG. 8, in the embodiment where the two ends of the arc groove 232 are connected and form a circle, the concave part 234 can be correspondingly arranged as a circle.

In the embodiment, it is easier to ensure a residual thickness of the cover body 231 at the position where the arc groove 232 is arranged through the arrangement of the concave part 234 on the end cover 23, which lowers the manufacturing difficulty of the arc groove 232 and saves costs of production.

The embodiments of the present disclosure provide a battery cell 20, which includes the housing 21 and the end cover 23 provided in any of the embodiments above, wherein at least one end of the housing 21 is provided with an opening and the end cover 23 is configured to close the opening.

It can be understood that if one opening of the housing 21 is provided, the one end cover 23 is correspondingly provided; and if two openings of the housing are provided, the two end covers 23 are correspondingly provided.

In some embodiments, the end cover 23 is welded to the housing 21, and a welding position of the end cover 23 and the housing 21 is located at the edge position of the end cover 23.

The embodiments of the present disclosure provide a battery 100, which includes the box body 10 and the battery cell 20 provided in any of the embodiments above, wherein the box body 10 is configured to accommodate the battery cell 20.

The embodiments of the present disclosure further provide an electrical device, which includes the battery 100 provided in any of the embodiments above.

The electrical device can be any of the foregoing devices applying to the battery 100.

Referring to FIG. 5-FIG. 7, the embodiments of the present disclosure provide a circular end cover 23, wherein the end cover 23 includes the cover body 231, arc groove 232, concave part 234, and two through holes 233. The concave part 234 is concave from the surface of the cover body 231 along the thickness direction of the cover body 231, and the arc groove 232 is arranged above the bottom surface of the concave part 234. The perpendicular bisector B of the connecting line (the first connecting line A) of the two through holes 233 intersects with the arc groove 232 at the middle position 2321 of the arc groove 232. The arc groove 232 can be arranged integrally on one side of the connecting line (the first connecting line A) of the two through holes 233; the central angle of the arc groove 232 is not larger than 180°; and the depth of the arc groove 232 gradually increases from the middle position 2321 of the arc groove 232 to the two ends of the arc groove 232.

In such the circular end cover 23, the depth of the arc groove 232 gradually increases from the middle position 2321 of the arc groove 232 to the two ends of the arc groove 232, which increases the damage resistance of the cover body 231 in the middle position 2321 of the arc groove 232, and reduces the risk that the end cover 23 starts to release pressure before the pressure inside the battery cell 20 reaches the burst pressure, thereby improving the service life of the battery cell 20.

It is noted that the embodiments and features in the embodiments of the present disclosure can be combined with each other without conflict.

The above embodiments are intended only to illustrate the technical solutions of the present disclosure, and are not intended to limit the present disclosure. For those skilled in the art, the present disclosure can be made of various changes and variations. Any modifications, equivalent substitutions, improvements, etc. made within the spirit and principles of the present disclosure shall be included in the scope of protection of the present disclosure.

## Claims

1. An end cover, applicable to a battery cell, wherein the end cover comprises:
a cover body; and
an arc groove, configured in the cover body, wherein the cover body is configured to crack along the arc groove to release a pressure inside the battery cell when the pressure or a temperature inside the battery cell reaches a threshold, and
a depth of the arc groove gradually increases from a middle position of the arc groove to two ends of the arc groove.

2. The end cover according to claim 1, wherein the end cover further comprises:
two through holes, configured to penetrate the cover body, and the through holes are configured to mount electrode terminals, wherein a perpendicular bisector of a connecting line of the two through holes intersects with the arc groove at the middle position.

3. The end cover according to claim 2, wherein the arc groove is symmetrical about the perpendicular bisector.

4. The end cover according to claim 2 or 3, wherein a center of circle of the arc groove and a center of circle of the cover body are both located on the perpendicular bisector.

5. The end cover according to any one of claims 1-4, wherein the cover body is a circle.

6. The end cover according to claim 5, wherein a center of circle of the arc groove coincides with a center of circle of the cover body.

7. The end cover according to claim 5, wherein in the arc groove, the middle position is closest to an edge of the cover body.

8. The end cover according to claim 5, wherein in the arc groove, the middle position is furthest to an edge of the cover body.

9. The end cover according to claim 8, wherein a line connecting the middle position and a center of circle of the cover body extends along a radial direction of the cover body, and a distance from the arc groove to a reference line increases gradually from the middle position to the two ends of the arc groove, wherein the reference line passes through the center of circle of the cover body and is perpendicular to the line connecting the middle position and the center of circle of the cover body.

10. The end cover according to any one of claims 1-9, wherein a central angle of the arc groove is smaller than or equal to 180°.

11. The end cover according to any one of claims 1-5 and 7, wherein the two ends of the arc groove are connected and form a circle, and a center of circle of the cover body is located outside a circular area defined by the arc groove; and in the arc groove, the middle position is closest to an edge of the cover body.

12. The end cover according to any one of claims 1-11, wherein the end cover further comprises:
a concave part, configured to be concave from a surface of the cover body along a thickness direction of the cover body, wherein the arc groove is arranged at a bottom surface of the concave part.

13. A battery cell, comprising:
a housing, provided with an opening on at least one end; and
the end cover according to any one of claims 1-12, configured to close the opening.

14. A battery, comprising:
the battery cell according to claim 13; and
a box body, configured to accommodate the battery cell.

15. An electrical device, comprising the battery according to claim 14.
